# EUROPEAN PATENT APPLICATION

(11) **EP 3 361 116 A1**
(43) Date of publication of application: **15.08.2018**
(21) Application number: 18154967.6
(22) Date of filing: 02.02.2018
(51) Int. Cl.: F16D 61/00

(54) **BRAKE MODULE**

(30) Priority: 06.02.2017 JP 2017019615
(71) Applicant: Toyota Jidosha Kabushiki Kaisha, Aichi-Ken 471-8571 (JP)
(72) Inventor: YOKOYAMA, Tomohiro, Aichi-ken,, 471-8571 (JP)
(74) Representative: J A Kemp

(57) **Abstract**

A brake module includes an inner member (32; 52) rotating with a tire-wheel assembly, an annular outer disk disposed on an outer periphery of the inner member, a pad (5; 25) generating a braking force when the pad abuts against the outer disk, a piston (7; 22) moving the pad in an axial direction of the outer disk by sliding, a facing pad (6; 26) disposed on an opposite side of the outer disk with respect to the pad and generating a braking force when the facing pad abuts against the outer disk, and a fixing member (33; 53) fixed to the outer disk or the inner member in contact with both the outer disk and the inner member and holding the outer disk to be movable in the axial direction. The piston presses and moves the outer disk via the pad and allows the outer disk to abut against the facing pad during braking.

## Description

### BACKGROUND OF THE INVENTION

### 1. Field of the Invention

The invention relates to a brake module.

### 2. Description of Related Art

A brake module to which a floating type caliper is applied is known in the related art, in which a piston pressing a pad to a disk side is disposed simply on one side of the disk rotating with a tire-wheel assembly (refer to, for example, Japanese Unexamined Patent Application Publication No. 2013-011297 (JP 2013-011297 A)).

In the brake module disclosed in JP 2013-011297 A, a pad disposed on the axial-direction inner side of the disk is pressed and moved by the piston and abuts against the disk during braking. Then, the caliper itself is slid by a movement reaction force in the direction that is opposite to the movement direction of the piston and a pad disposed on the axial-direction outer side of the disk abuts against the disk. In this manner, a braking force is generated in the tire-wheel assembly by the disk being pinched from both sides.

### SUMMARY OF THE INVENTION

In the brake module disclosed in JP 2013-011297 A, however, the caliper needs to be slid, and thus the brake module disclosed in JP 2013-011297 A adopts a configuration in which a slide pin disposed on the caliper is inserted into a mounting and the caliper is slidably supported by the mounting. Accordingly, the brake module disclosed in JP 2013-011297 A is problematic in terms of weight reduction as the slide pin and the mounting need to be disposed.

The invention provides a brake module that can be reduced in weight.

An aspect of the invention relates to a brake module including an inner member rotating with a tire-wheel assembly, an annular outer disk disposed on an outer periphery of the inner member, a pad generating a braking force when the pad abuts against the outer disk, a piston moving the pad in an axial direction of the outer disk by sliding, a facing pad disposed on an opposite side of the outer disk with respect to the pad and generating a braking force when the facing pad abuts against the outer disk, and a fixing member fixed to the outer disk or the inner member in contact with both the outer disk and the inner member and holding the outer disk to be movable in the axial direction. The piston presses and moves the outer disk via the pad and allows the outer disk to abut against the facing pad during braking.

According to the aspect of the invention, the brake module is configured such that the outer disk is movable in the axial direction. During braking, the piston presses and moves the outer disk in the axial direction via the pad and allows the outer disk to abut against the facing pad. Accordingly, the braking force can be generated in the tire-wheel assembly without a movement of the facing pad by the outer disk being pinched from both sides by the pad and the facing pad, and thus a caliper does not have to be slid in the axial direction as in JP 2013-011297 A. As a result, a slide pin inserted into a mounting does not have to be disposed as in JP 2013-011297 A for a caliper to be slid, and thus the weight of the brake module can be reduced. Therefore, a brake module that is light in weight can be provided.

In the brake module according to the aspect of the invention, the pad may be joined to the piston and the inner member may be connected to a motor for driving the tire-wheel assembly and may receive a regenerative braking force generated by the motor.

According to the aspect of the invention, torque does not have to be received by a mounting, and thus the mounting itself is unnecessary and the weight of the brake module can be further reduced.

In the brake module according to the aspect of the invention, the fixing member may be provided with a boot elastically deformable in the axial direction on a path of the movement of the outer disk.

According to the aspect of the invention, earth, sand, and so on entering the path of the axial-direction movement of the outer disk that is attributable to vehicle traveling is suppressed, and thus the durability of the brake module can be improved.

In the brake module according to the aspect of the invention, the fixing member may be a bolt.

According to the aspect of the invention, the outer disk is moved in the axial direction along a shaft portion of the bolt, and thus the outer disk can be stably held by the bolt.

In the brake module according to the aspect of the invention, the inner member may be provided with an inner projecting portion protruding to the outer disk side, the outer disk may be provided with an outer projecting portion protruding to the inner member side, and a side surface of the inner projecting portion and a side surface of the outer projecting portion may be in contact with each other.

According to the aspect of the invention, part of the torque that is received by the bolt during braking can be received by the projecting portions, and thus the durability of the brake module can be further improved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a top sectional view illustrating a schematic configuration of a brake module according to the related art;
FIG. 2A is a top sectional view illustrating a schematic configuration of a brake module according to an embodiment of the invention;
FIG. 2B is a top sectional view illustrating the schematic configuration of the brake module according to the embodiment of the invention;
FIG. 2C is a top sectional view illustrating the schematic configuration of the brake module according to the embodiment of the invention;
FIG. 3 is a front perspective view illustrating an overall configuration of a brake module according to a first embodiment;
FIG. 4 is a rear perspective view illustrating the overall configuration of the brake module according to the first embodiment;
FIG. 5A is a right side view illustrating the overall configuration of the brake module according to the first embodiment;
FIG. 5B is a right side view illustrating the overall configuration of the brake module according to the first embodiment;
FIG. 5C is a right side view illustrating the overall configuration of the brake module according to the first embodiment;
FIG. 6 is a rear perspective view illustrating a configuration of an outer disk and a configuration of an inner member according to the first embodiment;
FIG. 7 is a front view illustrating the configuration of the outer disk and the configuration of the inner member according to the first embodiment;
FIG. 8 is a rear view illustrating the configuration of the outer disk and the configuration of the inner member according to the first embodiment;
FIG. 9 is a left side view illustrating the configuration of the outer disk and the configuration of the inner member according to the first embodiment;
FIG. 10 is an enlarged side view of the B part illustrated in FIG. 9;
FIG. 11 is a cross-sectional view taken along line XI-XI of FIG. 10;
FIG. 12 is a front perspective view illustrating a configuration of a caliper according to the first embodiment;
FIG. 13 is a front view illustrating the configuration of the caliper according to the first embodiment;
FIG. 14 is a top view illustrating the configuration of the caliper according to the first embodiment;
FIG. 15 is a right side view illustrating the configuration of the caliper according to the first embodiment;
FIG. 16 is an exploded perspective view illustrating the configuration of the caliper according to the first embodiment;
FIG. 17 is a front perspective view illustrating an overall configuration of a brake module according to a second embodiment;
FIG. 18 is a front view illustrating the overall configuration of the brake module according to the second embodiment;
FIG. 19A is a right side view illustrating the overall configuration of the brake module according to the second embodiment;
FIG. 19B is a right side view illustrating the overall configuration of the brake module according to the second embodiment;
FIG. 19C is a right side view illustrating the overall configuration of the brake module according to the second embodiment;
FIG. 20 is a front perspective view illustrating a configuration of an outer disk and a configuration of an inner disk according to the second embodiment;
FIG. 21 is a front view illustrating the configuration of the outer disk and the configuration of the inner disk according to the second embodiment;
FIG. 22 is a left side view illustrating the configuration of the outer disk and the configuration of the inner disk according to the second embodiment;
FIG. 23 is an enlarged side sectional view of the B part in FIG. 22, which is a part of the XXIII-XXIII cross section illustrated in FIG. 21;
FIG. 24 is a perspective view illustrating a configuration of a leaf spring according to the second embodiment;
FIG. 25 is a front view illustrating the configuration of the leaf spring according to the second embodiment;
FIG. 26 is a perspective view illustrating a configuration of a rivet according to the second embodiment;
FIG. 27 is a side view illustrating the configuration of the rivet according to the second embodiment;
FIG. 28 is a perspective view illustrating a configuration of a joining part of the outer disk and the inner disk according to the second embodiment; and
FIG. 29 is a front view illustrating the configuration of the joining part of the outer disk and the inner disk according to the second embodiment.

### DETAILED DESCRIPTION OF EMBODIMENTS

Hereinafter, an embodiment of the invention will be described with reference to accompanying drawings. In all of the drawings, the same reference numerals will be used to refer to the same components, and description thereof will be omitted as appropriate.

### Overview of Invention

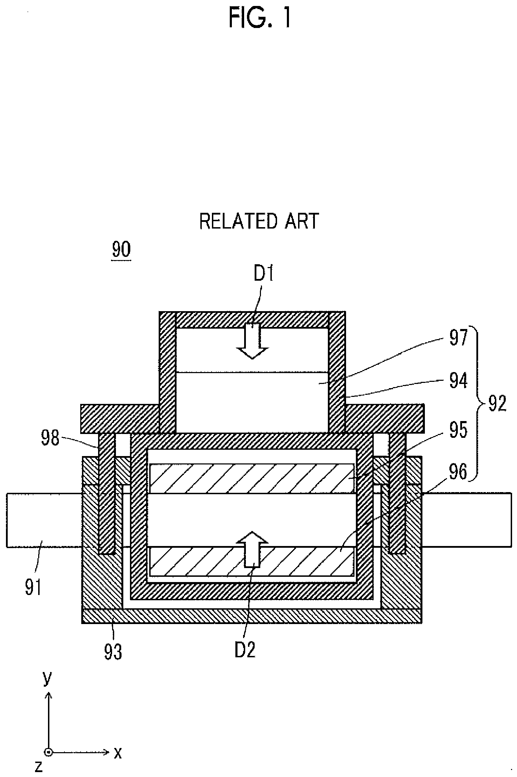

Firstly, an overview of the invention will be described in contrast to the related art. A schematic configuration of a brake module 90 according to the related art in which a slide pin and a mounting are disposed will be described first with reference to FIG. 1. FIG. 1 is a top sectional view illustrating the schematic configuration of the brake module 90 according to the related art. In FIG. 1, the y axis direction is the axial direction of a disk 91, the y axis minus direction is the axially outward direction (that is, the vehicle outward direction), and the y axis plus direction is the axially inward direction (that is, the vehicle inward direction).

As illustrated in FIG. 1, the brake module 90 according to the related art is provided with the disk 91, a caliper 92, and a mounting 93. The caliper 92 is a floating type caliper and is provided with a cylinder 94, a pad 95, a facing pad 96, and a piston 97.

The disk 91 rotates with a tire-wheel assembly (not illustrated) and is fixed not to move in the axial direction. The pad 95 is disposed on the inner side of the axial direction of the disk 91 to be capable of coming into contact with or being separated from (that is, abutting against or being separated from, same as below) the disk 91. The pad 95 is a plate-shaped brake pad. The pad 95 generates a braking force when the pad 95 abuts against the disk 91. The facing pad 96 is disposed on the outer side of the axial direction of the disk 91, that is, on the opposite side of the disk 91 with respect to the pad 95 to be capable of coming into contact with or being separated from the disk 91 and face the disk 91. The facing pad 96 is a plate-shaped brake pad. The facing pad 96 generates a braking force when the facing pad 96 abuts against the disk 91. The facing pad 96 is fixed to the cylinder 94.

The piston 97 is fitted into the cylinder 94 on the inner side of the axial direction of the disk 91 to be capable of performing a sliding movement in the axial direction. The cylinder 94 has two slide pins 98 extending from the inner side of the axial direction of the disk 91 to the outer side of the axial direction of the disk 91. Hole portions are disposed in the mounting 93, and the two slide pins 98 are inserted into the hole portions to be capable of moving in the axial direction. The mounting 93 supports the cylinder 94 (the caliper 92) to be slidable in the axial direction by the two slide pins 98 being inserted into the hole portions.

An operation during braking of the brake module 90 according to the related art will be described below. Before braking, the pad 95 and the facing pad 96 are apart from the disk 91. Firstly, the piston 97 is pressurized in the arrow D1 direction in the drawing (that is, the axially outward direction, same as below) by hydraulic oil being supplied into the cylinder 94. Then, the piston 97 performs a sliding movement in the arrow D1 direction in the drawing in the cylinder 94 and presses the pad 95. Then, the pad 95 is pressed by the piston 97, moves in the arrow D1 direction in the drawing, and abuts against the disk 91.

The disk 91 is fixed not to move in the axial direction. Accordingly, once the pad 95 presses the disk 91 at the time mentioned above, the cylinder 94 receives the reaction force from the disk 91, slides in the arrow D2 direction in the drawing (that is, the axially inward direction, same as below) that is opposite to the movement direction of the piston 97, and presses the facing pad 96. Then, the facing pad 96 is pressed by the cylinder 94, moves in the arrow D2 direction in the drawing, and abuts against the disk 91. A braking force is generated in the tire-wheel assembly (not illustrated) by the disk 91 being pinched from both sides by the pad 95 and the facing pad 96 as described above.

As described above, the brake module 90 according to the related art has a configuration in which the disk 91 is fixed in the axial direction. In this configuration, the cylinder 94 to which the facing pad 96 is fixed is slid in the axial direction so that the facing pad 96 is moved in the axial direction. The torque that is applied to the pad 95 and the facing pad 96 during braking is received by the mounting 93 in this configuration.

Accordingly, in the brake module 90 according to the related art, the slide pins 98 and the mounting 93 need to be disposed so that the caliper 92 (the cylinder 94) is slid and the torque applied to the pad 95 and the facing pad 96 is received. Accordingly, the brake module 90 according to the related art is problematic in terms of weight reduction.

The aspect of the invention is to reduce the weight of a brake module by making a slide pin and a mounting unnecessary.

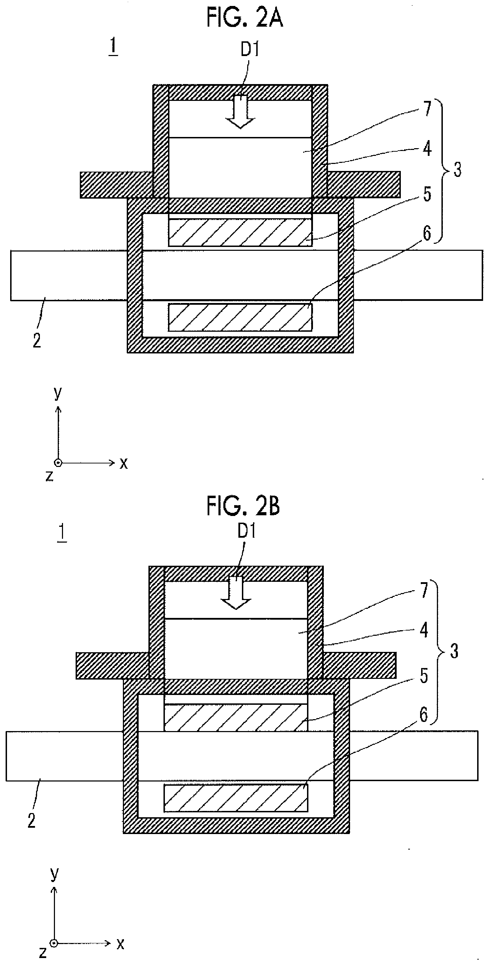

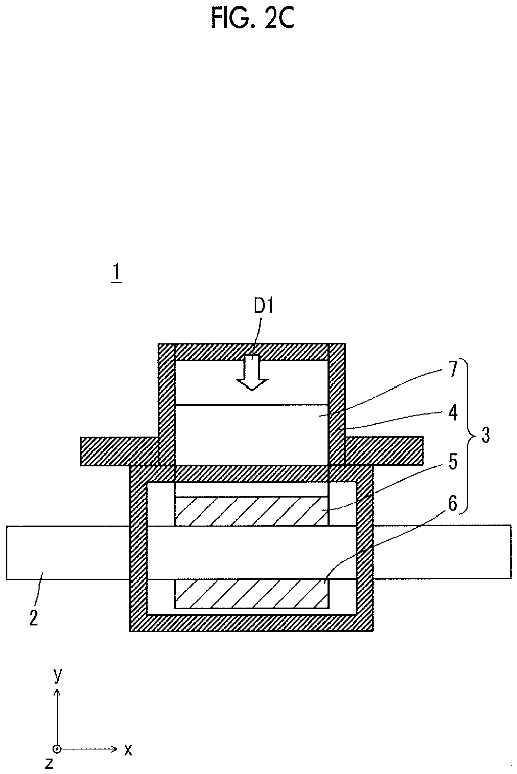

Hereinafter, a schematic configuration of a brake module 1 according to the embodiment of the invention will be described with reference to FIGS. 2A to 2C. FIGS. 2A to 2C are top sectional views illustrating the schematic configuration of the brake module 1 according to the embodiment of the invention. FIG. 2A shows a state where a pad 5 and a facing pad 6 are apart from a disk 2. FIG. 2B shows a state where the pad 5 has moved to the position of the disk 2. FIG. 2C shows a state where the pad 5 and the disk 2 have moved to the position of the facing pad 6 and the disk 2 is pinched from both sides. In FIGS. 2A to 2C, the y axis direction is the axial direction of the disk 2, the y axis minus direction is the axially outward direction (that is, the vehicle outward direction), and the y axis plus direction is the axially inward direction (that is, the vehicle inward direction). As illustrated in FIGS. 2A to 2C, the brake module 1 according to the embodiment of the invention is provided with the disk 2 and a caliper 3. The caliper 3 is a floating type caliper and is provided with a cylinder 4, the pad 5, the facing pad 6, and a piston 7.

The disk 2 rotates with a tire-wheel assembly (not illustrated) and is configured to be movable in the axial direction. The pad 5 is disposed on the inner side of the axial direction of the disk 2 to be capable of coming into contact with or being separated from the disk 2. The pad 5 is a plate-shaped brake pad. The pad 5 generates a braking force when the pad 5 abuts against the disk 2. The piston 7 is fitted into the cylinder 4 on the inner side of the axial direction of the disk 2 to be capable of performing a sliding movement in the axial direction.

The facing pad 6 is disposed on the outer side of the axial direction of the disk 2, that is, on the opposite side of the disk 2 with respect to the pad 5 to be capable of coming into contact with or being separated from the disk 2 and face the pad 5. The facing pad 6 is a plate-shaped brake pad. The facing pad 6 generates a braking force when the facing pad 6 abuts against the disk 2. The surface of the facing pad 6 that is on the side opposite to the disk 2 side is joined to a cylinder cover (not illustrated), and the facing pad 6 is fixed to the cylinder 4 via the cylinder cover.

The cylinder 4 is configured not to move in the axial direction. Accordingly, the facing pad 6 fixed to the cylinder 4 is also configured not to move in the axial direction.

An operation during braking of the brake module 1 according to the embodiment of the invention will be described below. Before braking, the pad 5 and the facing pad 6 are in a state where the pad 5 and the facing pad 6 are apart from the disk 2 (FIG. 2A). The piston 7 is pressurized in the arrow D1 direction in the drawing (that is, the axially outward direction, same as below) by hydraulic oil being supplied into the cylinder 4 in the state where the pad 5 and the facing pad 6 are apart from the disk 2. Then, the piston 7 performs a sliding movement in the arrow D1 direction in the drawing in the cylinder 4, the pad 5 also moves in the arrow D1 direction in the drawing with the piston 7, and the pad 5 abuts against the disk 2 (FIG. 2B).

The disk 2 is configured to be movable in the axial direction at the time mentioned above. Accordingly, the disk 2 is pressed by the pad 5 abutting against the disk 2, moves in the arrow D1 direction in the drawing, and abuts against the facing pad 6 (FIG. 2C). A braking force is generated in the tire-wheel assembly (not illustrated) by the disk 2 being pinched from both sides by the pad 5 and the facing pad 6 as described above.

As described above, the brake module 1 according to the embodiment of the invention has a configuration in which the disk 2 is movable in the axial direction and the caliper 3 (the cylinder 4) is fixed in the axial direction. During braking, the piston 7 presses and moves the disk 2 in the axially outward direction via the pad 5 and allows the disk 2 to abut against the facing pad 6.

Accordingly, a braking force can be generated in the tire-wheel assembly (not illustrated) without a movement of the facing pad 6 by the disk 2 being pinched from both sides by the pad 5 and the facing pad 6. Therefore, the caliper 3 (the cylinder 4) does not have to be slid in the axial direction. As a result, a slide pin inserted into a mounting does not have to be disposed as in the related art for the caliper 3 to be slid, and thus the weight of the brake module 1 can be reduced.

### First Embodiment

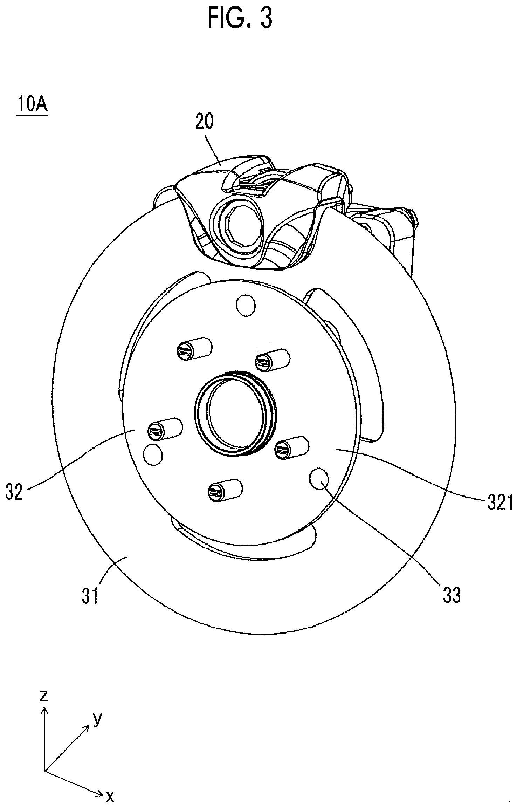

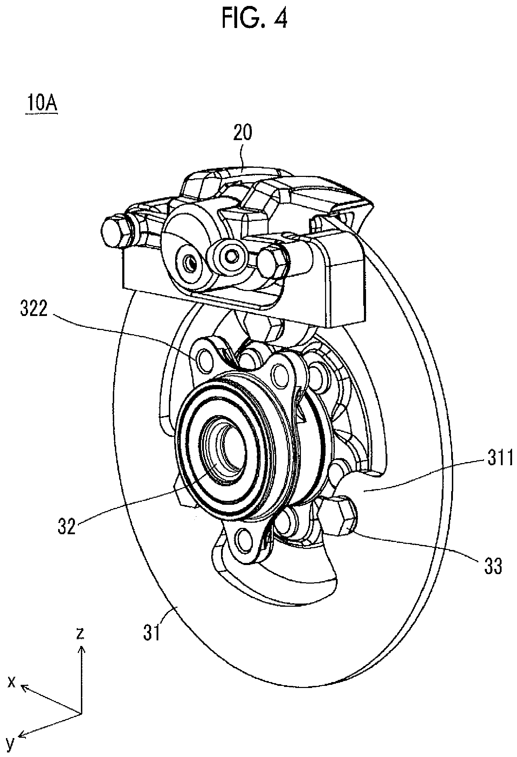

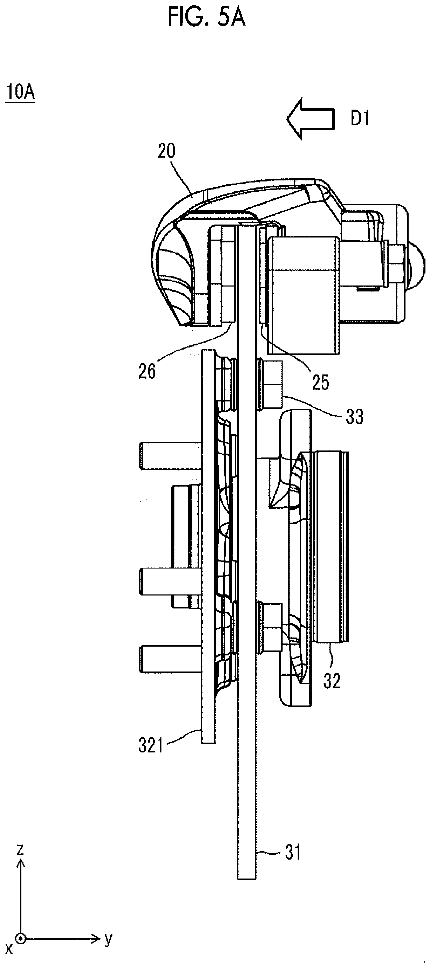

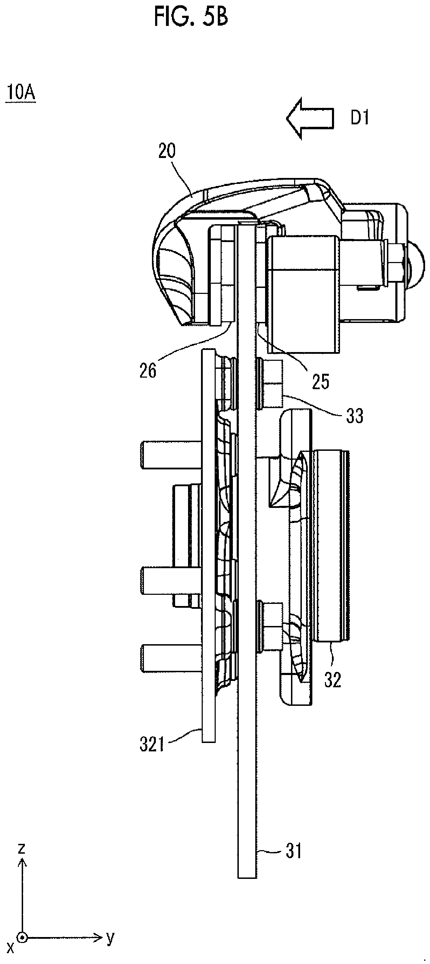

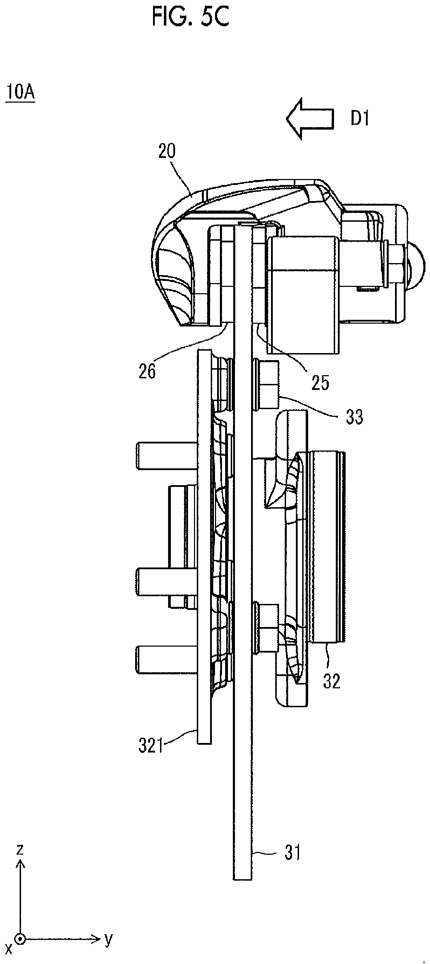

Hereinafter, a specific first embodiment of the invention will be described. An overall configuration of a brake module 10A according to the first embodiment will be described first with reference to FIGS. 3, 4, and 5A to 5C. FIGS. 3, 4, and 5A to 5C are diagrams illustrating the overall configuration of the brake module 10A according to the first embodiment. FIG. 3 is a front perspective view. FIG. 4 is a rear perspective view. FIGS. 5A to 5C are right side views. FIG. 5A shows a state where a pad 25 and a facing pad 26 are apart from an outer disk 31. FIG. 5B shows a state where the pad 25 has moved to the position of the outer disk 31. FIG. 5C shows a state where the pad 25 and the outer disk 31 have moved to the position of the facing pad 26 and the outer disk 31 is pinched from both sides. In the first embodiment, the y axis direction is the axial direction of the outer disk 31, the y axis minus direction is the axially outward direction (that is, the vehicle outward direction), and the y axis plus direction is the axially inward direction (that is, the vehicle inward direction).

As illustrated in FIGS. 3, 4, and 5A to 5C, the brake module 10A according to the first embodiment is provided with a caliper 20, the outer disk 31, and an inner member 32. The caliper 20 corresponds to the caliper 3 illustrated in FIGS. 2A to 2C. The outer disk 31 and the inner member 32 correspond to the disk 2 illustrated in FIGS. 2A to 2C.

The inner member 32 is a member that rotates with a tire-wheel assembly (not illustrated) and is a hub. The inner member 32 is provided with a disk-shaped base portion 321 to which the wheel of the tire-wheel assembly (not illustrated) is attached. The base portion 321 is disposed on the outer side of the axial direction of the outer disk 31 to face the outer disk 31. The surface of the base portion 321 that is on the side opposite to the surface facing the outer disk 31 is a wheel fastening surface to which the wheel of the tire-wheel assembly (not illustrated) is attached. The inner member 32 is fixed not to move in the axial direction.

The outer disk 31 is an annular member disposed on the outer periphery of the inner member 32. The outer disk 31 is held to be movable in the axial direction by three bolts 33 (fixing members) fastened and fixed to the inner member 32 (details will be described later).

During braking, the caliper 20 allows the outer disk 31 to abut against the facing pad 26 disposed on the outer side of the axial direction of the outer disk 31 by a piston 22 (described later) pressing and moving the outer disk 31 in the arrow D1 direction in the drawing (that is, the axially outward direction, same as below) via the pad 25 disposed on the inner side of the axial direction of the outer disk 31. A braking force is generated in the tire-wheel assembly (not illustrated) by the outer disk 31 being pinched from both sides by the pad 25 and the facing pad 26 as described above.

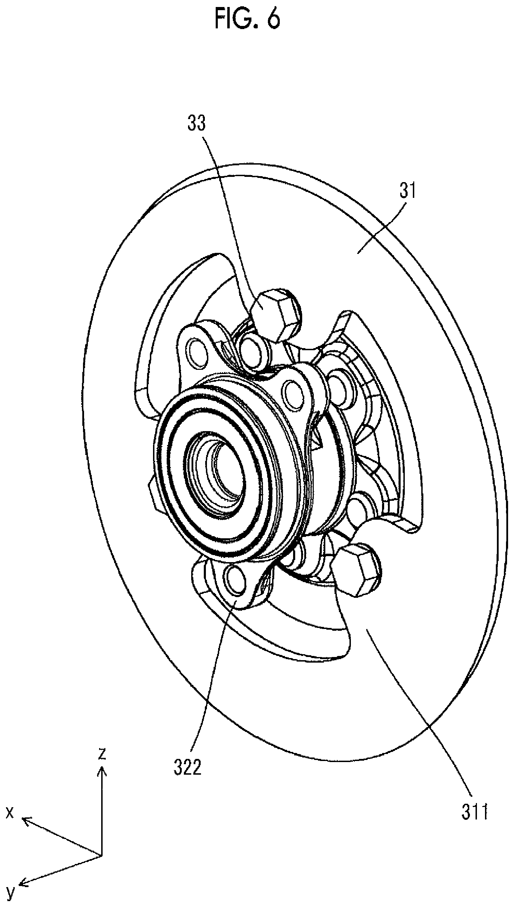

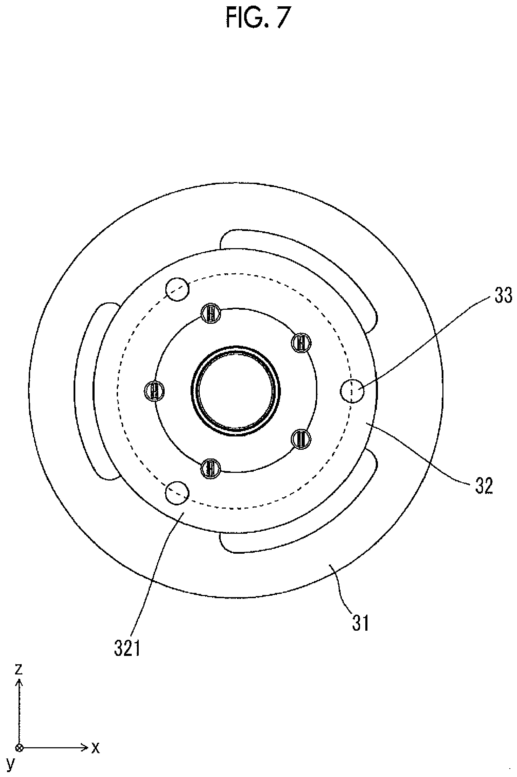

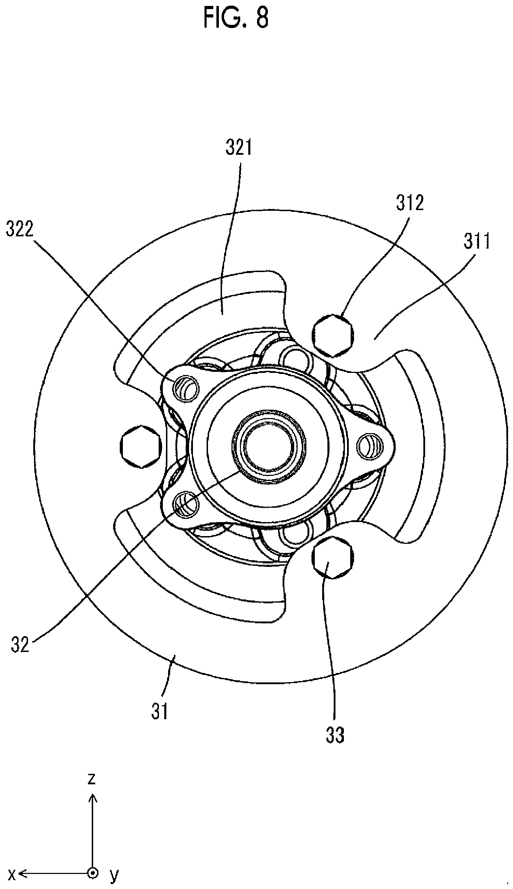

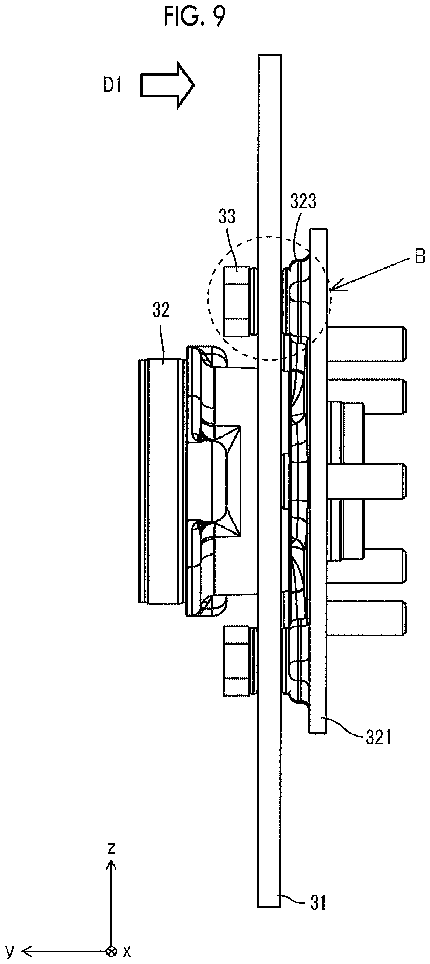

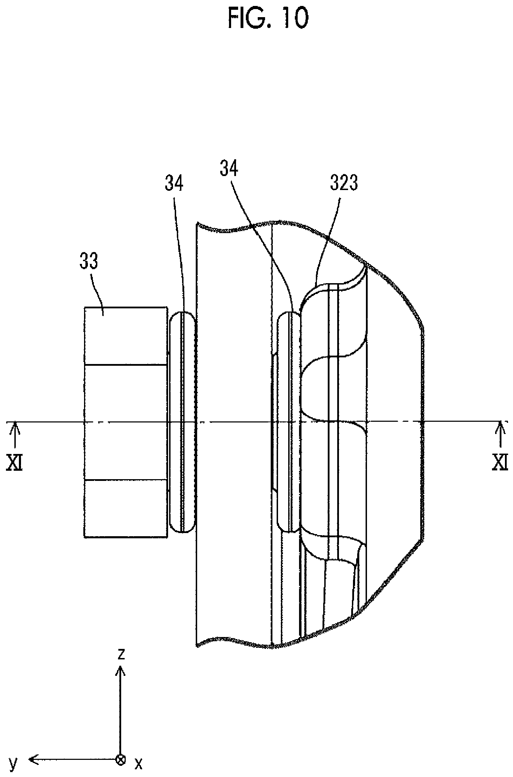

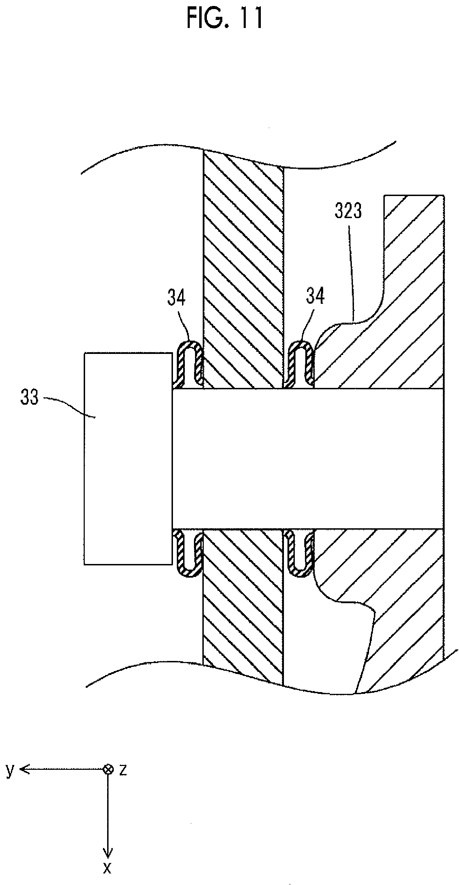

Hereinafter, the configuration of the outer disk 31 according to the first embodiment and the configuration of the inner member 32 according to the first embodiment will be described in detail with reference to FIGS. 6 to 11. FIGS. 6 to 11 are diagrams illustrating the configuration of the outer disk 31 according to the first embodiment and the configuration of the inner member 32 according to the first embodiment. FIG. 6 is a rear perspective view. FIG. 7 is a front view. FIG. 8 is a rear view. FIG. 9 is a left side view. FIG. 10 is an enlarged side view of the B part that is illustrated in FIG. 9. FIG. 11 is a cross-sectional view taken along line XI-XI of FIG. 10.

The outer disk 31 has an inner peripheral edge portion in which three projecting portions 311 (outer projecting portions) protruding to the inner member 32 side are formed at substantially equal intervals. A hole portion 312 is formed in each of the three projecting portions 311. Each of the three bolts 33 is inserted into the hole portion 312 from the inner side of the axial direction of the outer disk 31, and a tip of a shaft portion of the bolt 33 is fastened and fixed to the base portion 321 of the inner member 32. Accordingly, a fastening seating surface 323 to which the bolt 33 is fastened is formed at the position in the base portion 321 that corresponds to each of the three bolts 33. Still, the bolt 33 is fastened and fixed not to protrude from the wheel fastening surface of the base portion 321.

Gaps are ensured between a head portion of the bolt 33 and the axial-direction inner side surface of the outer disk 31 and between the fastening seating surface 323 on the base portion 321 and the axial-direction outer side surface of the outer disk 31. As a result, the outer disk 31 is movable in the axial direction and is capable of moving in the arrow D1 direction in the drawing during braking. The bolt 33 is a non-replacement component, and thus it is preferable that the bolt 33 is higher in hardness than the outer disk 31. Conceivable methods by which the hardness of the bolt 33 is higher than the hardness of the outer disk 31 include a material higher in hardness than the material of the outer disk 31 constituting the bolt 33, examples of which include a surface treatment such as a nitriding treatment being performed on the bolt 33. However, the methods are not limited thereto.

Boots 34 that can be elastically deformed in the axial direction are disposed in the gap between the head portion of the bolt 33 and the axial-direction inner side surface of the outer disk 31 and the gap between the fastening seating surface 323 on the base portion 321 and the axial-direction outer side surface of the outer disk 31. As a result, earth, sand, and so on entering the above-described gap parts that is attributable to vehicle traveling is suppressed, and the durability of the brake module 10A is improved. The boots 34 can be elastically deformed in the axial direction, and thus do not hinder an axial-direction movement by the outer disk 31. The installation locations of the boots 34 are not limited to the above. The boots 34 may be disposed on the path of the axial-direction movement by the outer disk 31. The boots 34 can be realized with, for example, ethylene propylene rubber (EPDM), but is not limited thereto. The boots 34 are optional.

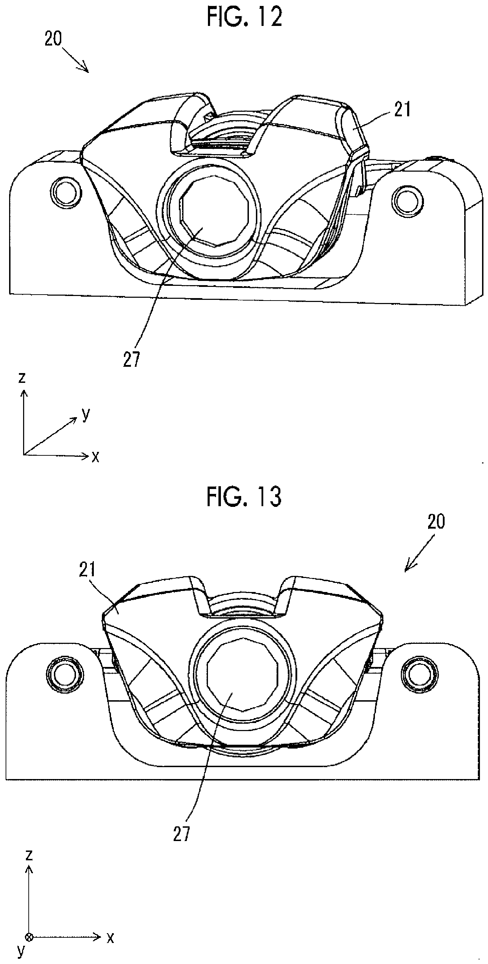

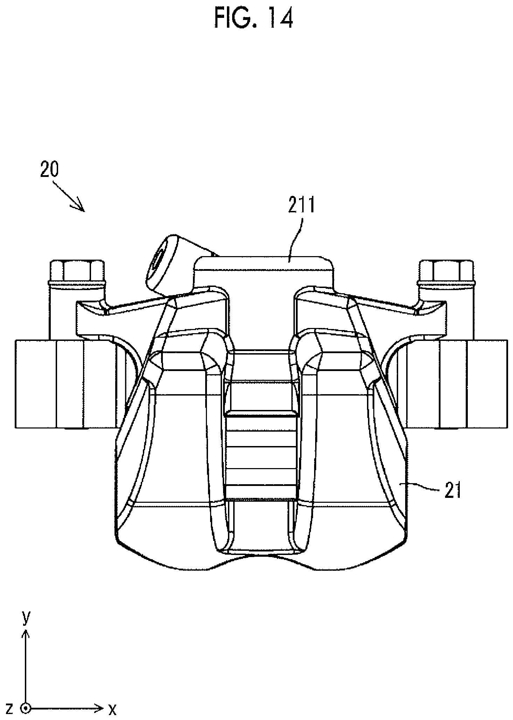

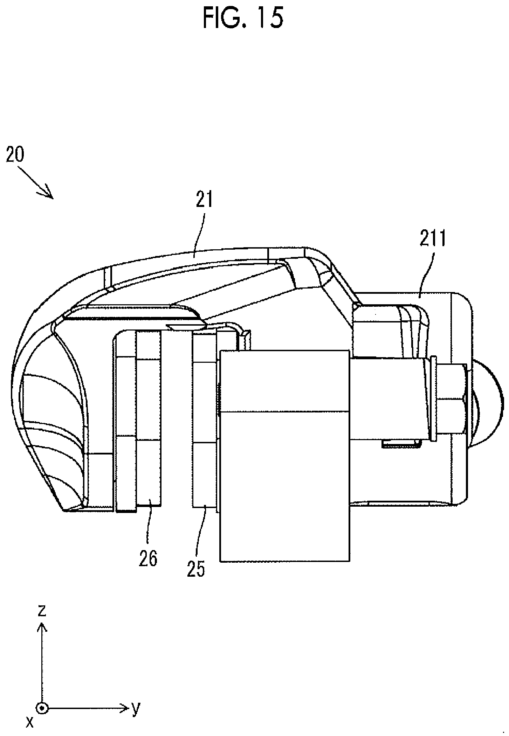

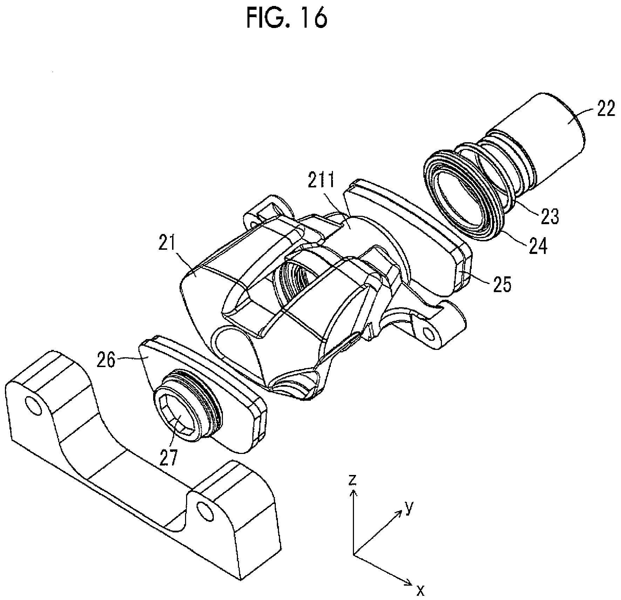

Hereinafter, the configuration of the caliper 20 according to the first embodiment will be described in detail with reference to FIGS. 12 to 16. FIGS. 12 to 16 are diagrams illustrating the configuration of the caliper 20 according to the first embodiment. FIG. 12 is a front perspective view. FIG. 13 is a front view. FIG. 14 is a top view. FIG. 15 is a right side view. FIG. 16 is an exploded perspective view. In FIG. 16, the axial-direction positions of the components other than a cylinder 21 are shown in a shifted manner for easy understanding of the structure.

As illustrated in FIGS. 12 to 16, the caliper 20 is provided with the cylinder 21, the piston 22, a piston seal 23, a piston boot 24, the pad 25, the facing pad 26, and a cylinder cover 27. The cylinder 21, the pad 25, the facing pad 26, and the piston 22 correspond to the cylinder 4, the pad 5, the facing pad 6, and the piston 7 illustrated in FIGS. 2A to 2C, respectively.

The piston 22 is fitted into a piston storage portion 211 of the cylinder 21 on the inner side of the axial direction of the disk 2 to be capable of performing a sliding movement in the axial direction. The piston seal 23 seals the gap between the outer peripheral surface of the piston 22 and the inner peripheral surface of the cylinder 21. The piston boot 24 covers the part of the piston 22 that is exposed from the cylinder 21.

The pad 25 is disposed on the inner side of the axial direction of the outer disk 31 to be capable of coming into contact with or being separated from the outer disk 31. The pad 25 is a plate-shaped brake pad. The pad 25 generates a braking force when the pad 25 abuts against the outer disk 31.

The pad 25 is joined to the end portion of the piston 22 that is on the outer disk 31 side. Accordingly, once the piston 22 performs a sliding movement, the pad 25 also moves in the same movement direction with the piston 22. However, the pad 25 may not be joined to the piston 22.

The facing pad 26 is disposed on the outer side of the axial direction of the outer disk 31, that is, on the opposite side of the outer disk 31 with respect to the pad 25 to be capable of coming into contact with or being separated from the outer disk 31 and face the pad 25. The facing pad 26 is a plate-shaped brake pad. The facing pad 26 generates a braking force when the facing pad 26 abuts against the outer disk 31. The surface of the facing pad 26 that is on the side opposite to the outer disk 31 is joined to the cylinder cover 27, and the facing pad 26 is fixed to the cylinder 21 via the cylinder cover 27.

The cylinder 21 is configured not to move in the axial direction. Accordingly, the facing pad 26 fixed to the cylinder 21 is also configured not to move in the axial direction.

An operation during braking of the brake module 10A according to the first embodiment will be described below. Before braking, the pad 25 and the facing pad 26 are in a state where the pad 25 and the facing pad 26 are apart from the outer disk 31 (FIG. 5A). The piston 22 is pressurized in the arrow D1 direction in the drawing by hydraulic oil being supplied into the piston storage portion 211 of the cylinder 21 in the state where the pad 25 and the facing pad 26 are apart from the outer disk 31. Then, the piston 22 performs a sliding movement in the arrow D1 direction in the drawing in the piston storage portion 211, the pad 25 also moves in the arrow D1 direction in the drawing with the piston 22, and the pad 25 abuts against the outer disk 31 (FIG. 5B).

At the time mentioned above, the outer disk 31 is held by the bolt 33 to be movable in the axial direction of the outer disk 31. Accordingly, the outer disk 31 is pressed by the pad 25 abutting against the outer disk 31, moves in the arrow D1 direction in the drawing, and abuts against the facing pad 26 (FIG. 5C). A braking force is generated in the tire-wheel assembly (not illustrated) by the outer disk 31 being pinched from both sides by the pad 25 and the facing pad 26 as described above.

In the brake module 10A according to the first embodiment, the outer disk 31 is held by the bolt 33 to be movable in the axial direction as described above. During braking, the piston 22 presses and moves the outer disk 31 in the axially outward direction via the pad 25 and allows the outer disk 31 to abut against the facing pad 26.

Accordingly, a braking force can be generated in the tire-wheel assembly (not illustrated) without a movement of the facing pad 26 by the outer disk 31 being pinched from both sides by the pad 25 and the facing pad 26. Therefore, the caliper 20 does not have to be slid in the axial direction. As a result, a slide pin inserted into a mounting does not have to be disposed as in the related art for the caliper 20 to be slid, and thus the weight of the brake module 10A can be reduced.

In the brake module 10A according to the first embodiment, the pad 25 is joined to the piston 22. A vehicle provided with a tire-wheel assembly-driving motor such as a hybrid vehicle (HV) and an electric vehicle (EV) is configured to use a regenerative braking force as well as the hydraulic pressure-based braking force using the piston 22 described above. The regenerative braking force is a braking force generated from the electric resistance that is generated when electric power generation is performed by the tire-wheel assembly-driving motor being rotated and the electric energy resulting from the electric power generation is recovered.

Accordingly, when the inner member 32 is connected to the tire-wheel assembly-driving motor (not illustrated) in the vehicle using the regenerative braking force such as the HV and the EV, the inner member 32 also receives the regenerative braking force generated by the motor, and thus the torque that is applied to the pad 25 and the facing pad 26 during the hydraulic pressure-based braking is reduced by the same amount as the regenerative braking force. Therefore, the torque applied to the pad 25 and the facing pad 26 can be sufficiently received by the piston 22 to which the pad 25 is joined.

Accordingly, in the case of a configuration in which the inner member 32 is connected to the tire-wheel assembly-driving motor and the inner member 32 receives the regenerative braking force by the motor, torque does not have to be received by a mounting as in the related art, and thus the mounting itself is unnecessary and the weight of the brake module 10A can be further reduced. The inner member 32 may also not be connected to the tire-wheel assembly-driving motor. In this case, torque may be received by a mounting being appropriately disposed.

In the brake module 10A according to the first embodiment, the boots 34 that can be elastically deformed in the axial direction are disposed on the path of the axial-direction movement of the outer disk 31. Specifically, the boots 34 are disposed in the gap between the head portion of the bolt 33 and the axial-direction inner side surface of the outer disk 31 and the gap between the fastening seating surface 323 on the base portion 321 and the axial-direction outer side surface of the outer disk 31.

Accordingly, earth, sand, and so on entering the path of the axial-direction movement of the outer disk 31 that is attributable to vehicle traveling is suppressed, and thus the durability of the brake module 10A can be improved.

In the brake module 10A according to the first embodiment, the bolt 33 is inserted into the hole portion 312 in the outer disk 31 from the inner side of the axial direction of the outer disk 31 and is fastened and fixed to the inner member 32.

Accordingly, the outer disk 31 is moved in the axial direction along the shaft portion of the bolt 33, and thus the outer disk 31 can be stably held by the bolt 33.

In the brake module 10A according to the first embodiment, a side surface of the projecting portion 311 (the outer projecting portion) of the outer disk 31 and a side surface of a projecting portion 322 (an inner projecting portion) disposed on the inner member 32 and protruding to the outer disk 31 side are apart from each other. In an alternative configuration, however, both may be in contact with each other. In the case of a configuration in which the side surface of the projecting portion 311 and the side surface of the projecting portion 322 are in contact with each other, part of the torque that is received by the bolt 33 during braking can be received by the projecting portions, and thus the durability of the brake module 10A can be further improved. The side surface of the projecting portion 311 and the side surface of the projecting portion 322 may also not be in contact with each other. In addition, the projecting portion 311 and the projecting portion 322 are optional.

### Second Embodiment

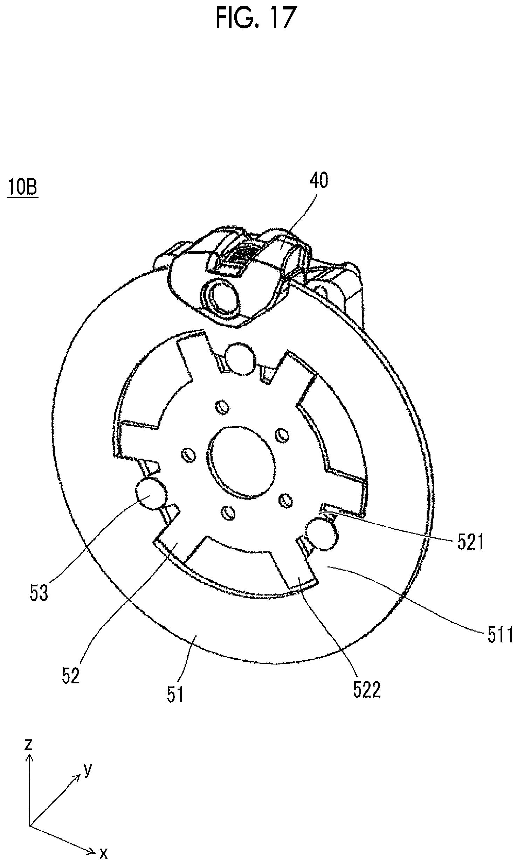

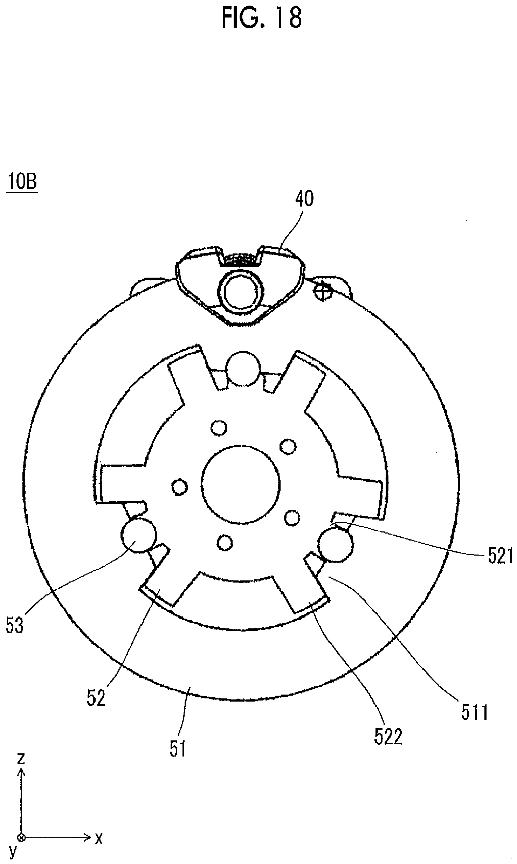

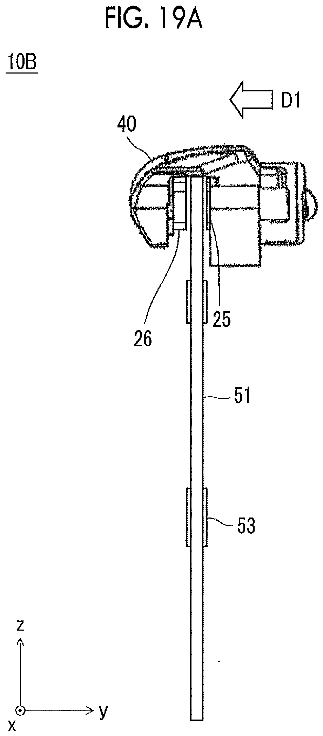

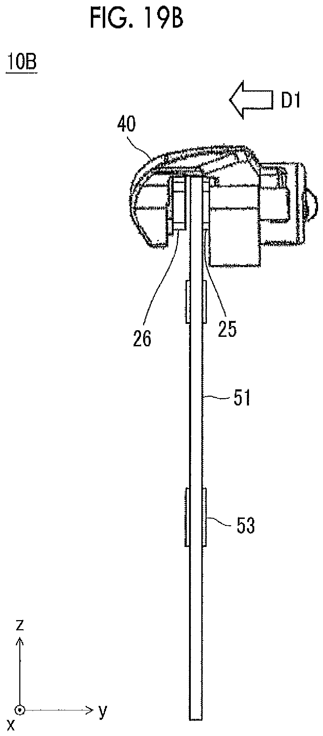

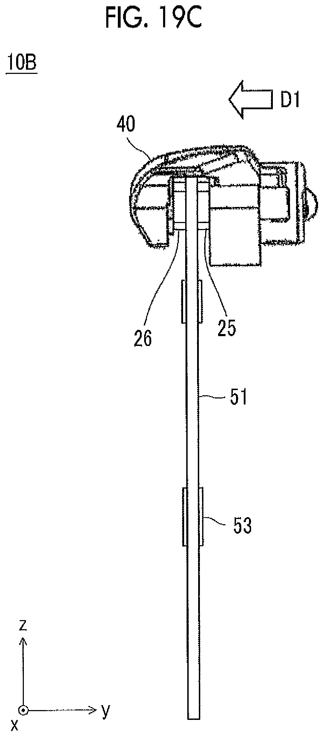

Hereinafter, a specific second embodiment of the invention will be described. An overall configuration of a brake module 10B according to the second embodiment will be described first with reference to FIGS. 17, 18, and 19A to 19C. FIGS. 17, 18, and 19A to 19C are diagrams illustrating the overall configuration of the brake module 10B according to the second embodiment. FIG. 17 is a front perspective view. FIG. 18 is a front view. FIGS. 19A to 19C are right side views. FIG. 19A shows a state where the pad 25 and the facing pad 26 are apart from an outer disk 51. FIG. 19B shows a state where the pad 25 has moved to the position of the outer disk 51. FIG. 19C shows a state where the pad 25 and the outer disk 51 have moved to the position of the facing pad 26 and the outer disk 51 is pinched from both sides. In the second embodiment, the y axis direction is the axial direction of the outer disk 51, the y axis minus direction is the axially outward direction (that is, the vehicle outward direction), and the y axis plus direction is the axially inward direction (that is, the vehicle inward direction).

As illustrated in FIGS. 17, 18, and 19A to 19C, the brake module 10B according to the second embodiment is provided with a caliper 40, the outer disk 51, and an inner disk 52. The caliper 40 corresponds to the caliper 3 illustrated in FIGS. 2A to 2C. The outer disk 51 and the inner disk 52 correspond to the disk 2 illustrated in FIGS. 2A to 2C. The caliper 40 is identical in configuration and operation to the caliper 20 according to the first embodiment, and thus description thereof will be omitted herein.

The inner disk 52 is a member that is attached to a hub (not illustrated) and rotates with a tire-wheel assembly (not illustrated). The inner disk 52 is fixed not to move in the axial direction.

The outer disk 51 is an annular member disposed on the outer periphery of the inner disk 52. The outer disk 51 is joined to the inner disk 52 by a rivet 53 (a fixing member) and a leaf spring 54 (described later) and is movable in the axial direction (details will be described later).

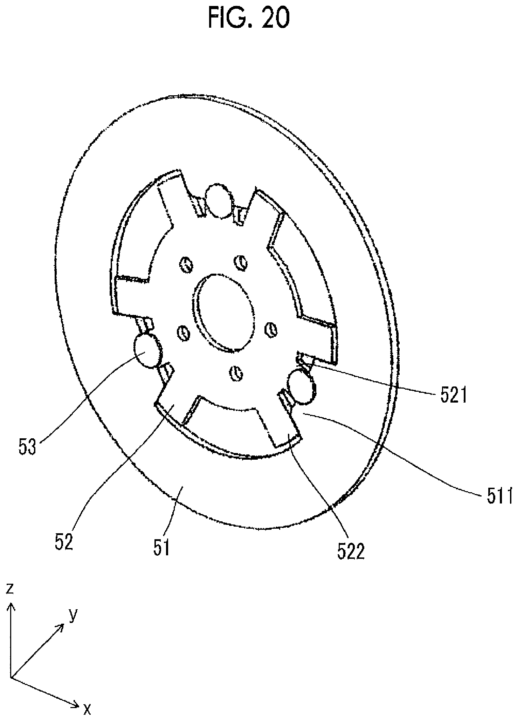

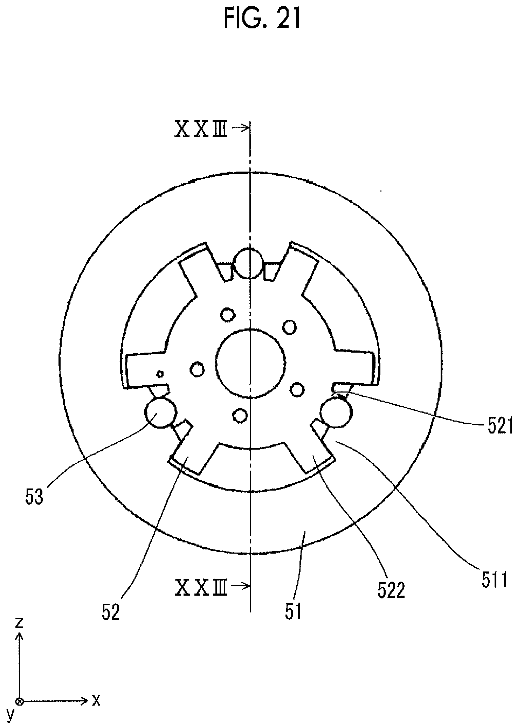

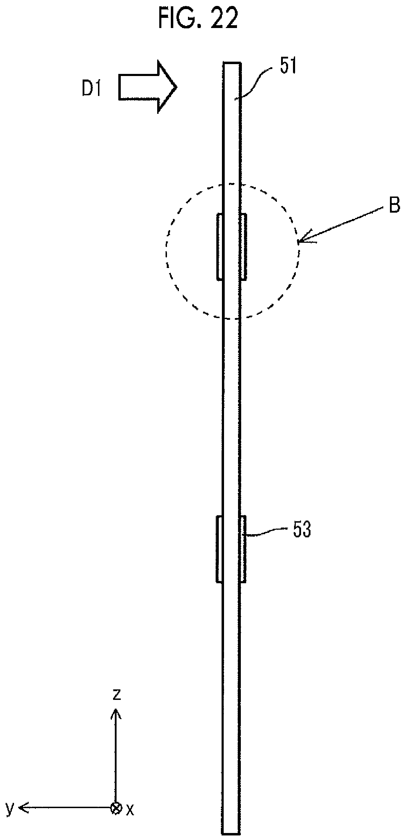

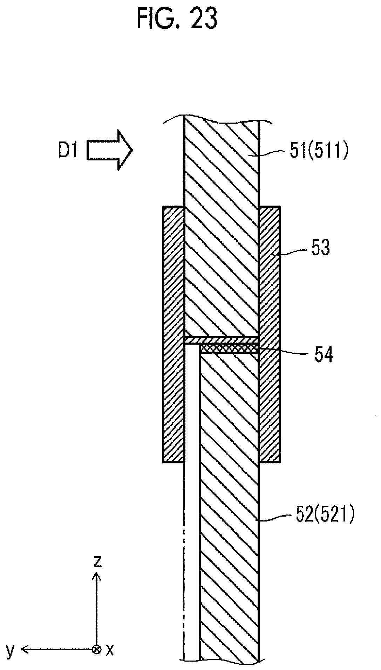

Hereinafter, the configuration of the outer disk 51 according to the second embodiment and the configuration of the inner disk 52 according to the second embodiment will be described in detail with reference to FIGS. 20 to 23. FIGS. 20 to 23 are diagrams illustrating the configuration of the outer disk 51 according to the second embodiment and the configuration of the inner disk 52 according to the second embodiment. FIG. 20 is a front perspective view. FIG. 21 is a front view. FIG. 22 is a left side view FIG. 23 is an enlarged side sectional view of the B part in FIG. 22 of the cross section taken along line XXII-XXII of FIG. 21.

As illustrated in FIGS. 20 to 23, the outer disk 51 has an inner peripheral edge portion in which three projecting portions 511 protruding to the inner disk 52 side are formed at substantially equal intervals. The inner disk 52 has an outer peripheral edge portion in which three projecting portions 521 protruding to the outer disk 51 side are formed at positions corresponding respectively to the three projecting portions 511. The rivet 53 and the leaf spring 54 (described later) are interposed between a tip of the projecting portion 511 and a tip of the projecting portion 521. The outer disk 51 and the inner disk 52 are joined to each other in a state where the outer disk 51 is biased radially outward by the leaf spring 54.

The plate thickness of the inner disk 52 is smaller than the plate thickness of the outer disk 51, and thus a gap is ensured between the axial-direction inner side surface of the inner disk 52 and the rivet 53 (FIG. 23). As a result, the outer disk 51 is movable in the axial direction and is capable of moving in the arrow D1 direction in the drawing (that is, the axially outward direction, same as below) during braking.

Six projecting portions 522 in total are formed in the outer peripheral edge portion of the inner disk 52. The projecting portions 522 protrude to the outer disk 51 side and are positioned on both sides of each of the three projecting portions 521. The projecting portions 522 are longer in radial-direction length than the projecting portions 521, and recessed portions are formed by the projecting portions 522 on both sides of the projecting portions 521. The projecting portions 511 are fitted into the recessed portions in a state where side surfaces of the projecting portions 511 and side surfaces of the projecting portions 522 are in contact with each other and are joined to the projecting portions 521. The side surfaces of the projecting portions 511 and side surfaces of the projecting portions 522 may also not be in contact with each other. In addition, the projecting portions 511 and the projecting portions 522 are optional.

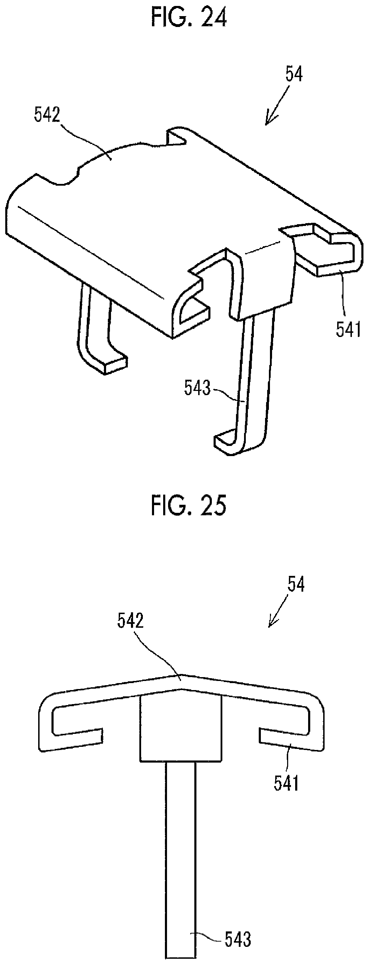

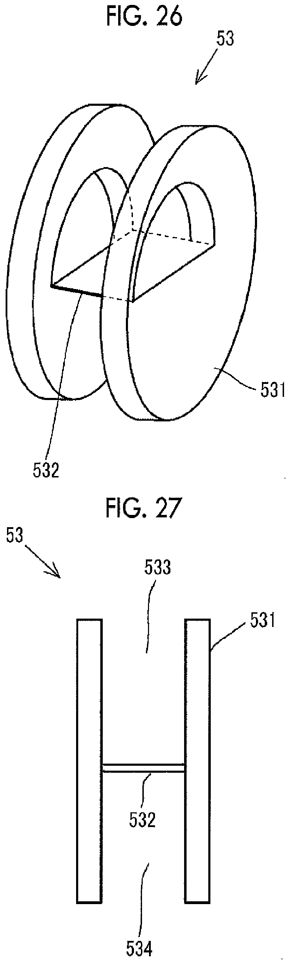

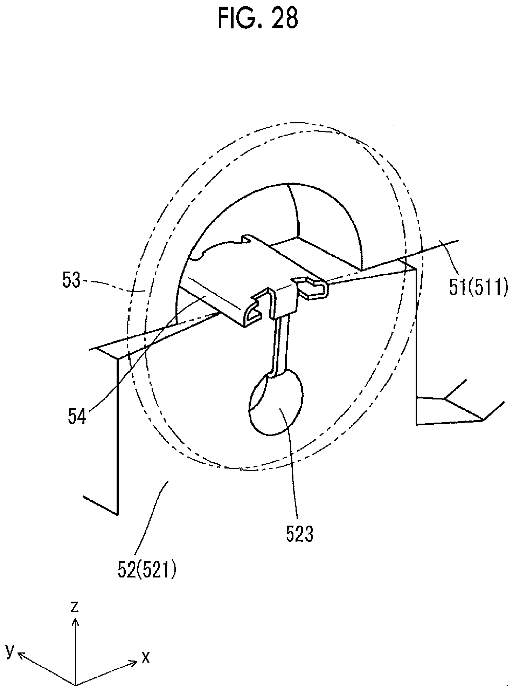

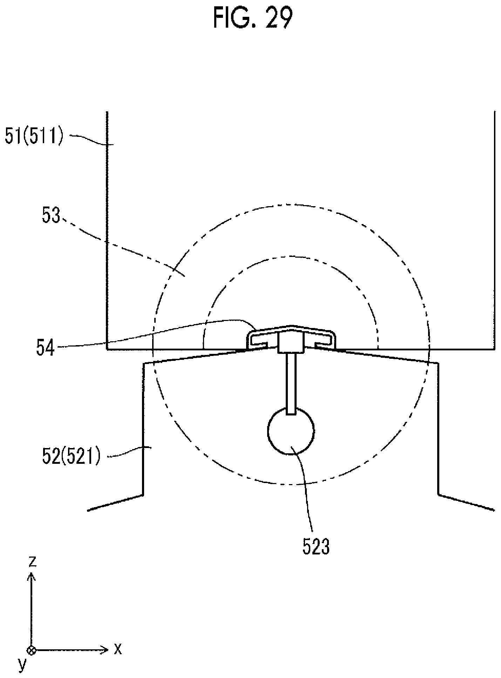

Hereinafter, the configuration of a joining part of the outer disk 51 and the inner disk 52 according to the second embodiment will be described in detail with reference to FIGS. 24 to 28. FIGS. 24 and 25 are diagrams illustrating the configuration of the leaf spring 54 according to the second embodiment. FIG. 24 is a perspective view, and FIG. 25 is a front view. FIGS. 26 and 27 are diagrams illustrating the configuration of the rivet 53 according to the second embodiment. FIG. 26 is a perspective view, and FIG. 27 is a side view. FIGS. 28 and 29 are diagrams illustrating the configuration of the joining part of the outer disk 51 and the inner disk 52 according to the second embodiment. FIG. 28 is a perspective view, and FIG. 29 is a front view.

As illustrated in FIGS. 24 to 28, the leaf spring 54 is placed on a tip surface of the projecting portion 521 of the inner disk 52. The leaf spring 54 is shaped such that end portions 541 at both circumferential-direction ends are folded toward the radial-direction inner side substantially in a U-shape in sectional view and a top portion 542 near substantially the middle in the circumferential direction is folded to protrude to the radial-direction outer side. In the leaf spring 54, a claw portion 543 is disposed on a side surface near substantially the middle in the circumferential direction. The claw portion 543 extends to the radial-direction inner side and meshes with a hole portion 523 formed in the projecting portion 521 of the inner disk 52. When the leaf spring 54 is attached, the leaf spring 54 is placed on the tip surface of the projecting portion 521 such that the claw portion 543 straddles the projecting portion 521 and the claw portion 543 meshes with the hole portion 523 formed in the projecting portion 521. Regarding the size of the leaf spring 54, the axial-direction length of the leaf spring 54 may be a length corresponding to the plate thickness of the inner disk 52 and the circumferential-direction length of the leaf spring 54 may be shorter than the circumferential-direction length of the projecting portion 521.

The rivet 53 is an H-shaped member. In the rivet 53, two disk-shaped members 531 in which crescent-shaped hole portions are formed are disposed to face each other and the inner circle portions of the crescent moons in the two members 531 are connected to each other by a connection portion 532. Accordingly, an opening portion 533 is formed on the outer crescent moon circle side of the connection portion 532 and an opening portion 534 is formed on the side of the connection portion 532 that is opposite to the outer crescent moon circle. The projecting portion 511 of the outer disk 51 is fitted into the opening portion 533 of the rivet 53, and the projecting portion 521 of the inner disk 52 is fitted into the opening portion 534 of the rivet 53 in a state where the leaf spring 54 is attached. Regarding the size of the rivet 53, the axial-direction length of the connection portion 532 may be a length corresponding to the plate thickness of the outer disk 51 and the circumferential-direction length of the connection portion 532 may be longer than the circumferential-direction length of the leaf spring 54 and shorter than the circumferential-direction length of the projecting portion 521.

The leaf spring 54 has the shape that is illustrated in FIGS. 24 and 25. Accordingly, a biasing force is generated in the radial direction alone and no biasing force is generated in the axial direction. Therefore, the outer disk 51 is biased to the radial-direction outer side alone by the leaf spring 54 and is held in a floating state with respect to the inner disk 52. As a result, abnormal noise generation in the case of a movement of the outer disk 51 attributable to vehicular disturbance can be suppressed.

The leaf spring 54 has the shape that is illustrated in FIGS. 24 and 25. Accordingly, the leaf spring 54 is in contact with the rivet 53 in the top portion 542 alone. Therefore, the leaf spring 54 and the rivet 53 have a relatively small contact area and the resistance of the leaf spring 54 can be reduced.

The leaf spring 54 has the claw portion 543 meshing with the hole portion 523 formed in the projecting portion 521. Accordingly, detachment of the leaf spring 54 can be restricted. The rivet 53 has the shape that is illustrated in FIGS. 26 and 27, and thus the leaf spring 54 can be bound by the connection portion 532 for the inner circles of the crescent moons.

An operation during braking of the brake module 10B according to the second embodiment will be described below Before braking, the pad 25 and the facing pad 26 are in a state where the pad 25 and the facing pad 26 are apart from the outer disk 51 (FIG. 19A). The piston 22 is pressurized in the arrow D1 direction in the drawing by hydraulic oil being supplied into the piston storage portion 211 of the cylinder 21 in the state where the pad 25 and the facing pad 26 are apart from the outer disk 51. Then, the piston 22 performs a sliding movement in the arrow D1 direction in the drawing in the piston storage portion 211, the pad 25 also moves in the arrow D1 direction in the drawing with the piston 22, and the pad 25 abuts against the outer disk 51 (FIG. 19B).

At the time mentioned above, the outer disk 51 and the inner disk 52 are joined to each other with the gap ensured between the axial-direction inner side surface of the inner disk 52 and the rivet 53, and thus the outer disk 51 is movable in the axial direction. Accordingly, the outer disk 51 is pressed by the pad 25 abutting against the outer disk 51, moves in the arrow D1 direction in the drawing, and abuts against the facing pad 26 (FIG. 19C). A braking force is generated in the tire-wheel assembly (not illustrated) by the outer disk 51 being pinched from both sides by the pad 25 and the facing pad 26 as described above.

In the brake module 10B according to the second embodiment, the outer disk 51 and the inner disk 52 are joined to each other with the gap ensured between the axial-direction inner side surface of the inner disk 52 and the rivet 53 as described above. Accordingly, the outer disk 51 is movable in the axial direction. During braking, the piston 22 presses and moves the outer disk 51 in the axially outward direction via the pad 25 and allows the outer disk 51 to abut against the facing pad 26.

Accordingly, a braking force can be generated in the tire-wheel assembly (not illustrated) without a movement of the facing pad 26 by the outer disk 51 being pinched from both sides by the pad 25 and the facing pad 26. Therefore, the caliper 40 does not have to be slid in the axial direction. As a result, a slide pin inserted into a mounting does not have to be disposed as in the related art for the caliper 40 to be slid, and thus the weight of the brake module 10B can be reduced.

In the brake module 10B according to the second embodiment, the pad 25 is joined to the piston 22. In the case of a configuration in which the inner disk 52 is connected to the tire-wheel assembly-driving motor (not illustrated) and the inner disk 52 receives the regenerative braking force by the motor, the torque that is applied to the pad 25 and the facing pad 26 during the hydraulic pressure-based braking is reduced by the same amount as the regenerative braking force, and thus the torque can be sufficiently received by the piston 22 to which the pad 25 is joined.

Accordingly, torque does not have to be received by a mounting as in the related art, and thus the mounting itself is unnecessary and the weight of the brake module 10B can be further reduced. The inner disk 52 may also not be connected to the tire-wheel assembly-driving motor. In this case, torque may be received by a mounting being appropriately disposed.

The brake module 10B according to the second embodiment is provided with the leaf spring 54 biasing the outer disk 51 radially outward.

Accordingly, the outer disk 51 can be held in a floating state with respect to the inner disk 52 by the leaf spring 54, and thus abnormal noise generation in the case of a movement of the outer disk 51 attributable to vehicular disturbance can be suppressed.

In the brake module 10B according to the second embodiment, the side surface of the projecting portion 511 of the outer disk 51 and the side surface of the projecting portion 522 of the inner disk 52 are in contact with each other. Accordingly, part of the torque that is received by the rivet 53 during braking can be received, and thus the durability of the brake module 10B can be further improved.

The invention is not limited to the embodiments described above and can be appropriately modified without departing from the scope of the invention. For example, although the bolt 33 is fixed to the inner member 32 and holds the outer disk 31 to be movable in the axial direction in the first embodiment, the invention is not limited thereto. In an alternative configuration, the bolt 33 may be fixed to the outer disk 31 and hold the outer disk 31 to be movable in the axial direction.

Although the second embodiment has a configuration in which the outer disk 51 is movable in the axial direction by the gap being ensured between the axial-direction inner side surface of the inner disk 52 and the rivet 53, the invention is not limited thereto. In an alternative configuration, the outer disk 51 may be movable in the axial direction by a gap being ensured between the axial-direction outer side surface of the outer disk 51 and the rivet 53. In addition, the gap may be provided with a boot as in the first embodiment.

## Claims

1. A brake module comprising:
an inner member (32; 52) rotating with a tire-wheel assembly;
an annular outer disk (31; 51) disposed on an outer periphery of the inner member;
a pad (5; 25) generating a braking force when the pad abuts against the outer disk;
a piston (7; 22) moving the pad in an axial direction of the outer disk by sliding;
a facing pad (6; 26) disposed on an opposite side of the outer disk with respect to the pad and generating a braking force when the facing pad abuts against the outer disk; and
a fixing member (33; 53) fixed to the outer disk or the inner member in contact with both the outer disk and the inner member and holding the outer disk to be movable in the axial direction,
wherein the piston presses and moves the outer disk via the pad and allows the outer disk to abut against the facing pad during braking.

2. The brake module according to claim 1, wherein:
the pad is joined to the piston; and
the inner member is connected to a motor for driving the tire-wheel assembly and receives a regenerative braking force generated by the motor.

3. The brake module according to claim 1 or 2, wherein the fixing member is provided with a boot (34) elastically deformable in the axial direction on a path of the movement of the outer disk.

4. The brake module according to any one of claims 1 to 3, wherein the fixing member is a bolt (33).

5. The brake module according to any one of claims 1 to 4, wherein:
the inner member is provided with an inner projecting portion (322; 522) protruding to the outer disk side;
the outer disk is provided with an outer projecting portion (311; 511) protruding to the inner member side; and
a side surface of the inner projecting portion and a side surface of the outer projecting portion are in contact with each other.
